# EUROPEAN PATENT APPLICATION

(11) **EP 2 599 564 A1**
(43) Date of publication of application: **05.06.2013**
(21) Application number: 11812430.4
(22) Date of filing: 25.07.2011
(51) Int. Cl.: B21D 11/14, E02D 5/56, E02D 17/20, E02D 27/42, F28F 9/24, F28F 13/12

(54) **SPIRAL STEEL, APPLICATION PRODUCT OF SAME, AND METHOD FOR MANUFACTURING SPIRAL STEEL**

(30) Priority: 28.07.2010 JP 2010169706
(71) Applicant: Goto, Tsuneo, Kumamoto 861-1102 (JP)
(72) Inventor: Goto, Tsuneo, Kumamoto 861-1102 (JP)
(74) Representative: Staudt, Hans-Peter
(86) International application number: PCT/JP2011/066848
(87) International publication number: WO 2012/014840

(57) **Abstract**

Abstract: A purpose of the invention is to provide a spiral piece of steel having high mechanical strength and being capable of easily making smaller the pitch intervals of twisted portions (spiral blade portions) even without changing the twist angle, and also to provide an application product thereof and a method for manufacturing the spiral piece of steel.

## Description

### Technical Field

The present invention relates to a spiral piece of steel formed by twisting a steel material in a certain form and an application product thereof as well as a method for manufacturing the spiral piece of steel.

### Background Art

Twisted flat pieces of steel have been conventionally used. The present applicant has proposed various applications of twisted flat pieces of steel that have been put into practice.

Typical examples include piles driven into the ground for use as shown in Patent Document 1, supports where a steel pipe is joined to a twisted flat piece of steel so that rigidity is secured as shown in Patent Document 2, and anchors for preventing a cloth material from being lifted up (tent pegs) as shown in Patent Document 3. These piles can easily be installed through driving, and it is also possible to easily remove these by pulling them out while rotating.

Other applications of twisted flat pieces of steel include drills for digging apparatuses as shown in Patent Document 4, conveying devices where a twisted flat piece of steel is used as a sending screw as shown in Patent Document 5, and devices for kneading and mixing food or powders where the left and right twisted flat pieces of steel face each other as shown in Patent Document 6.

Furthermore, Patent Document 7 discloses a method for manufacturing a twisted flat piece of steel according to which the two ends of a flat piece of steel are respectively secured, and the flat piece is pulled at one end while the other end is rotated so that the flat piece is twisted.

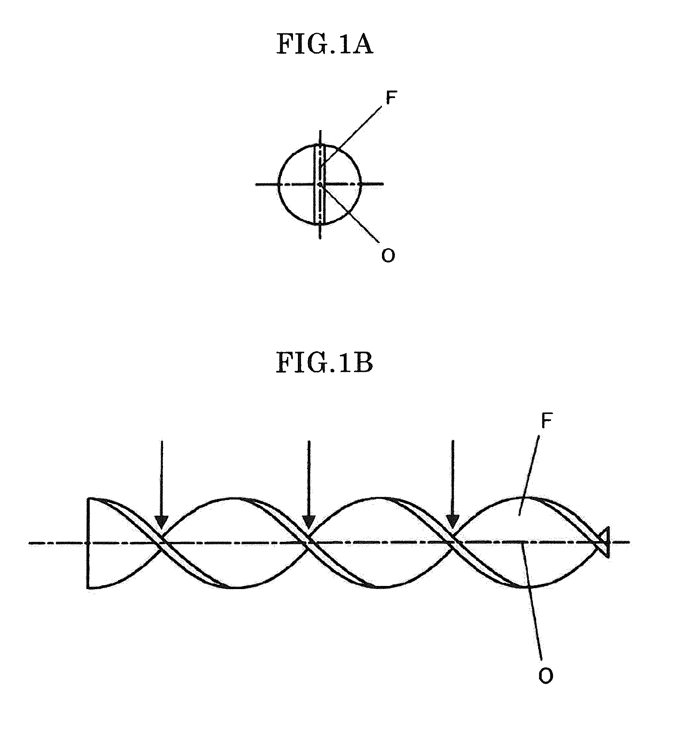

Various types of applications are possible for twisted flat pieces of steel as described above, and as shown in FIG. 1, a predetermined mechanical strength can be gained in a state where a flat piece of steel F is twisted around the center axis O against a force for pulling out the twisted flat piece of steel, and thus, there is an advantage that the twisted flat piece, such as of a pile, cannot be easily pulled out. However, deformation can easily occur in the portions indicated by the arrows, for example, against pressure in the longitudinal direction of the twisted flat piece of steel or against a bending load applied in the upward and downward directions as in FIG. 1, and thus, sufficient mechanical strength cannot be gained.

Therefore, it is difficult to use twisted flat pieces of steel for supports of a structure where a problem arises such that it becomes difficult to process or the efficiency is low in the processing because secondary processing is required in order to increase the mechanical strength. In addition, it may be extremely difficult to process a twisted flat piece of steel in the direction in which the pitch of the twisting of the flat piece is made smaller or compression buckling may be caused.

### Prior Art Documents

### Patent Documents

Patent Document 1: Japanese Unexamined Patent Publication 2001-323460
Patent Document 2: Japanese Unexamined Patent Publication 2002-302961
Patent Document 3: Japanese Unexamined Patent Publication 2006-309540
Patent Document 4: Japanese Unexamined Patent Publication 2003-328356
Patent Document 5: Japanese Unexamined Patent Publication 2008-202653
Patent Document 6: Japanese Unexamined Patent Publication 2005-279362
Patent Document 7: Japanese Unexamined Patent Publication H10 (1998)-296342

### Summary of the Invention

### Problem to be Solved by the Invention

Objects to be achieved by the present invention are to solve the above-described problems and to provide a spiral piece of steel having a high mechanical strength and being capable of easily making smaller the pitch interval of a twisted portion (spiral blade portion) even without changing a twist angle, and to provide an application product thereof and a method for manufacturing a spiral piece of steel.

### Means for Solving Problem

In order to achieve the above objects, the invention according to Claim 1 provides a spiral piece of steel, characterized by being formed by twisting a steel material around a center axis, where the center axis is parallel to the longitudinal direction of the steel material, and the steel material has such a form that at least three members with long sides are placed in radius form around the center axis.

The invention according to Claim 2 provides the spiral piece of steel according to Claim 1, characterized in that a hollow pipe is provided along the center axis, and the members with long sides are placed and fixed around the hollow pipe.

The invention according to Claim 3 provides a spiral piece of steel, characterized by being formed by twisting a steel material around a center axis, where the center axis is parallel to the longitudinal direction of the steel material, and the steel material has such a form that two members with long sides are placed symmetrically relative to the center axis, a hollow pipe is provided along the center axis, and the members with long sides are placed and fixed around the hollow pipe.

The invention according to Claim 4 provides the spiral piece of steel according to Claim 2 or 3, characterized in that a number of holes are created in a wall of the hollow pipe.

The invention according to Claim 5 provides the spiral piece of steel according to any of Claims 1 to 4, characterized in that the steel material is formed such that the members with long sides have such a thickness as to increase as the distance from the center axis increases, and the form of the members with long sides in a cross-section becomes approximately rectangular when the steel material is twisted.

The invention according to Claim 6 provides a spiral steel pile, characterized in that the spiral piece of steel according to any of Claims 1 to 5 is used as a pile to be driven into the ground or buried in the ground.

The invention according to Claim 7 provides the spiral steel pile according to Claim 6, characterized by further comprising a structure fixed to the spiral steel pile in such a manner that part of the spiral piece of steel is exposed from the ground, and the exposed part functions as a support for supporting the structure.

The invention according to Claim 8 provides the spiral steel pile according to Claim 6, characterized in that the spiral steel pile is driven into the ground in the horizontal direction or at an angle directed upward than the horizontal direction so as to be used as a ground anchor for preventing landslides or a base in the ground.

The invention according to Claim 9 provides a spiral steel pile, characterized in that the spiral piece of steel according to Claim 4 is used as a pipe for discharging water from the ground through the hollow pipe or as a pipe for injecting grout into the ground through the hollow pipe when driven into or buried in the ground.

The invention according to Claim 10 provides a digging apparatus, characterized in that the spiral piece of steel according to any of Claims 1 to 5 is used for a drill part of the digging apparatus.

The invention according to Claim 11 provides a feeding device, characterized in that the spiral piece of steel according to any of Claims 1 to 5 is used as a sending screw of the feeding device.

The invention according to Claim 12 provides a kneading device, characterized in that the spiral piece of steel according to any of Claims 1 to 5 is used as a kneading blade of the kneading device.

The invention according to Claim 13 provides a heat exchanger, characterized in that the spiral piece of steel according to Claim 2 or 3 is used as the wall material with which two fluids can be separated from each other and through which heat can be exchanged between the two fluids within the heat exchanger.

The invention according to Claim 14 provides a method for manufacturing the spiral piece of steel according to any of Claims 1 to 5, characterized in that the steel material is twisted while applying a predetermined tension to the steel material in the longitudinal direction.

The invention according to Claim 15 provides a method for manufacturing the spiral piece of steel according to Claim 14, characterized in that two holding means for holding both ends of the steel material are used, tension is applied in such a manner as to pull one holding means away from the other, and at least one holding means is rotated around the center axis of the steel material.

### Effects of the Invention

The invention according to Claim 1 provides a spiral piece of steel formed by twisting a steel material around a center axis, where the center axis is parallel to the longitudinal direction of the steel material, and the steel material has such a form that at least three members with long sides are placed in radius form around the center axis, and therefore, it is possible to greatly increase the mechanical strength of the spiral piece of steel as compared to twisted steel plates. In addition, it is possible to easily make smaller the pitch intervals between the twisted portions (twisted blade portions) without changing the twist angle.

In the invention according to Claim 2, a hollow pipe is provided along the center axis of the steel material, and the members with long sides are placed and fixed around the hollow pipe, and therefore, it is possible to use the spiral piece of steel in various applications, such as heat exchangers and pipes for discharging water, where the hollow pipe is used as part of a support or a flow path for a fluid is formed inside the hollow pipe.

The invention according to Claim 3 provides a spiral piece of steel, characterized by being formed by twisting a steel material around a center axis, where the center axis is parallel to the longitudinal direction of the steel material, and the steel material has such a form that two members with long sides are placed symmetrically relative to the center axis, a hollow pipe is provided along the center axis, and the members with long sides are placed and fixed around the hollow pipe, and therefore, it is possible to greatly increase the mechanical strength of the spiral piece of steel as compared to twisted steel plates. In addition, it is possible to use the spiral piece of steel in various applications, such as heat exchangers and pipes for discharging water, where the hollow pipe is used as part of a support or a flow path for a fluid is formed inside the hollow pipe.

In the invention according to Claim 4, a number of holes are created in a wall of the hollow pipe, and therefore, it is possible to use the spiral piece of steel in various applications because it is possible for a fluid that has been moved through the hollow pipe to be discharged to the outside of the hollow pipe through the holes, or it is possible for a fluid located outside the hollow pipe to be taken into the hollow pipe through the hole and to be moved through the hollow pipe.

In the invention according to Claim 5, the steel material is formed such that the members with long sides have such a thickness as to increase as the distance from the center axis increases, and the form of the members with long sides in a cross-section becomes approximately rectangular when the steel material is twisted, and therefore, the thickness of the portions corresponding to the members with long sides of the spiral piece of steel (spiral blade portions) is always constant, and it is possible for the mechanical strength of the spiral blade portions to be prevented from lowering.

The invention according to Claim 6 provides a spiral steel pile, characterized in that the spiral piece of steel is used as a pile to be driven into the ground or buried in the ground, and therefore, the pile is strong against deformation in response to the stress or the compression in the lateral direction of the pile, and the pitch intervals in the spiral blade portions can be made smaller, and thus, it is possible for the pile to have a greater area of contact with the ground, which increases resistance against the pulling force.

In the invention according to Claim 7, a structure fixed to the spiral steel pile is provided in such a manner that part of the spiral piece of steel is exposed from the ground, and the exposed part functions as a support for supporting the structure, and therefore, the increased mechanical strength of the spiral piece of steel can be used to make it possible for the spiral piece of steel to be applied to a support, which has been difficult with a conventional twisted steel plate.

In the invention according to Claim 8, the spiral steel pile is driven into the ground in the horizontal direction or at an angle directed upward than the horizontal direction so as to be used as a ground anchor for preventing landslides or a base in the ground, and therefore, it is possible to make smaller the pitch intervals in the spiral blade portions of the spiral piece of steel, which increases the resistance against the ground, and this is used to make the application for an anchor in the horizontal direction or directed upward than that or for a base in the ground possible, which have been difficult with a convention twisted steel plate.

The invention according to Claim 9 provides a spiral steel pile, characterized in that the spiral piece of steel is used as a pipe for discharging water from the ground through the hollow pipe or as a pipe for injecting grout into the ground through the hollow pipe when driven into or buried in the ground, and therefore, the spiral piece of steel itself has a high mechanical strength, which increases the efficiency of being driven into or buried in the ground, and thus, it is possible to provide an excellent pipe for discharging water or a pipe for injecting grout.

The invention according to Claim 10 provides a digging apparatus, characterized in that the spiral piece of steel is used for a drill part of the digging apparatus, and therefore, it is possible to make smaller the pitch intervals of the spiral blade portions of the spiral piece of steel so that the area of contact with the ground increases, and it is possible to scrape out the ground more efficiently than with a conventional twisted steel plate.

The invention according to Claim 11 provides a feeding device, characterized in that the spiral piece of steel is used as a sending screw of the feeding device, and therefore, it is possible to use the high mechanical strength of the spiral piece of steel so that the sending screw itself has a function of supporting the sending member, which has been difficult with a conventional twisted steel plate.

The invention according to Claim 12 provides a kneading device, characterized in that the spiral piece of steel is used as a kneading blade of the kneading device, and therefore, it is possible to make smaller the pitch intervals in the spiral blade portions of the spiral piece of steel, increase the area of contact with the object to be kneaded, and knead the object more efficiently than with a conventional twisted steel plate.

The invention according to Claim 13 provides a heat exchanger, characterized in that the spiral piece of steel is used as the wall material with which two fluids can be separated from each other and through which heat can be exchanged between the two fluids within the heat exchanger, and therefore, it is possible to make smaller the pitch intervals in the spiral blade portions of the spiral piece of steel, increase the duration and area of contact between the spiral blades and the fluid, and increase the efficiency in heat exchange.

The invention according to Claim 14 provides a method for manufacturing the spiral piece of steel, characterized in that the steel material is twisted while applying a predetermined tension to the steel material in the longitudinal direction, and therefore, it is possible to form a spiral piece of steel where the pitch intervals in the spiral blade portions are constant.

The invention according to Claim 15 provides a method for manufacturing the spiral piece of steel, characterized in that two holding means for holding both ends of the steel material are used, tension is applied in such a manner as to pull one holding means away from the other, and at least one holding means is rotated around the center axis of the steel material, and therefore, a spiral piece of steel can be manufactured easily in a very simple structure.

### Brief Description of the Drawings

FIGS. 1(a) and 1(b) are diagrams for illustrating a conventional twisted steel plate;
FIGS. 2(a) and 2(b) are diagrams for illustrating the spiral piece of steel according to the present invention;
FIG. 3 is a diagram for illustrating a method for supporting a structure using a conventional twisted steel plate;
FIG. 4 is a diagram for illustrating a method for supporting a structure using a spiral piece of steel according to the present invention;
FIG. 5(a) is a diagram showing a cross-section of a steel material used for the spiral piece of steel according to the first embodiment of the present invention, FIG. 5(b) is a diagram showing a cross-section of a twisted steel material;
FIG. 6 is a diagram for illustrating a steel material used for the spiral piece of steel according to the second embodiment of the present invention;
FIG. 7(a) is a diagram showing a cross-section of a steel material used for the spiral piece of steel according to the third embodiment of the present invention before being twisted; FIG. 7(b) is a diagram showing a cross-section of the steel material after being twisted;
FIG. 8(a) is a diagram showing a cross-section of a steel material used for the spiral piece of steel according to the fourth embodiment of the present invention before being twisted; FIG. 8(b) is a diagram showing a cross-section of the steel material after being twisted;
FIGS. 9(a), 9(b) and 9(c) are diagrams for illustrating steel materials used for the spiral piece of steel according to the fifth embodiment of the present invention;
FIGS. 10(a), 10(b) and 10(c) are diagrams for illustrating steel materials used for the spiral piece of steel according to the sixth embodiment of the present invention;
FIGS. 11(a) to 11(e) are diagrams for illustrating steel materials used for the spiral piece of steel according to the seventh embodiment of the present invention;
FIGS. 12(a) to 12(d) are diagrams for illustrating an example of a case where the spiral piece of steel according to the present invention is used for a heat exchanger;
FIGS. 13(a) and 13(b) are diagrams for illustrating an example of a case where the spiral piece of steel according to the present invention is used for a pipe for injecting grout; and
FIG. 14 is a diagram for illustrating an example of a case where the spiral piece of steel according to the present invention is used for a pipe for discharging water.

### Preferred Embodiments of the Invention

The spiral piece of steel according to the present invention, application products thereof and a method for manufacturing the spiral piece of steel are described in detail below.

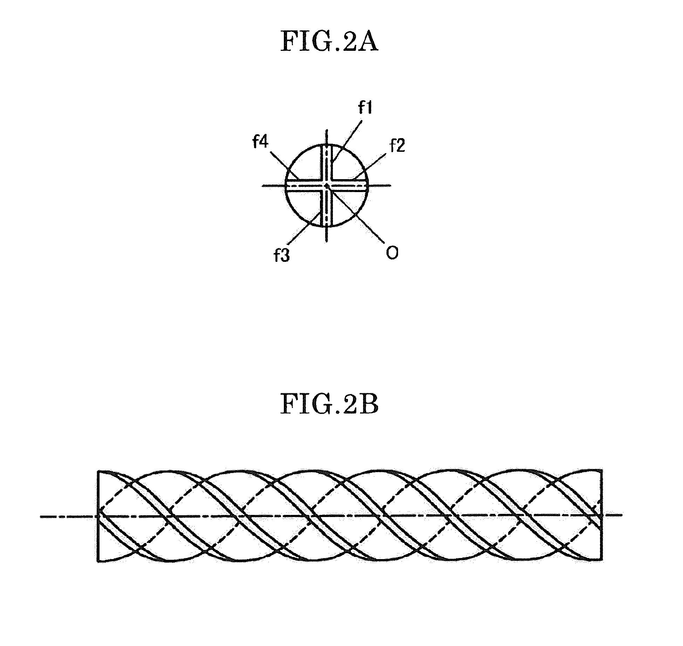

FIGS. 2(a) and 2(b) are diagrams for illustrating the spiral piece of steel according to the present invention.
The spiral piece of steel according to the present invention is formed by twisting a steel material around a center axis, where the center axis O is parallel to the longitudinal direction of the steel material, and at least three members with long sides (f1 to f4) are placed in radius form around the center axis O.
FIG. 2(a) is a cross-sectional diagram along a plane perpendicular to the longitudinal direction of the spiral piece of steel, and FIG. 2(b) is a side diagram showing the spiral piece of steel.

When the twisted steel plate in FIGS. 1(a) and 1(b) and the spiral piece of steel in FIGS. 2(a) and 2(b) are compared, the difference between the two is clear, and in particular, the spiral piece of steel does not have a portion having low mechanical strength, as indicated by the arrows in the twisted steel plate in FIGS. 1(a) and 1(b), and thus, it is possible for the spiral piece of steel to have remarkably high mechanical strength against compression in the longitudinal direction or stress in the upward and downward directions in the figures.

Though the twist angle of the twisted steel plate in FIGS. 1(a) and 1(b) and the twist angle of the spiral piece of steel in FIGS. 2(a) and 2(b) are the same (approximately 45 degrees), the pitch intervals in the twisted portions (spiral blade portions) of the spiral piece of steel are half of those of the twisted steel plate, and thus, it is possible to easily make smaller the pitch intervals in the invention. As a result, the area of the portions of the spiral piece of steel that make contact with the ground and the materials to be kneaded can be increased, and thus, it is possible to increase the resistance against the ground and carry out the kneading operation more efficiently.

Though the steel material used for the spiral piece of steel according to the present invention is not particularly limited, a steel material having high mechanical strength and on which it is possible to carry out a twisting process is preferable.

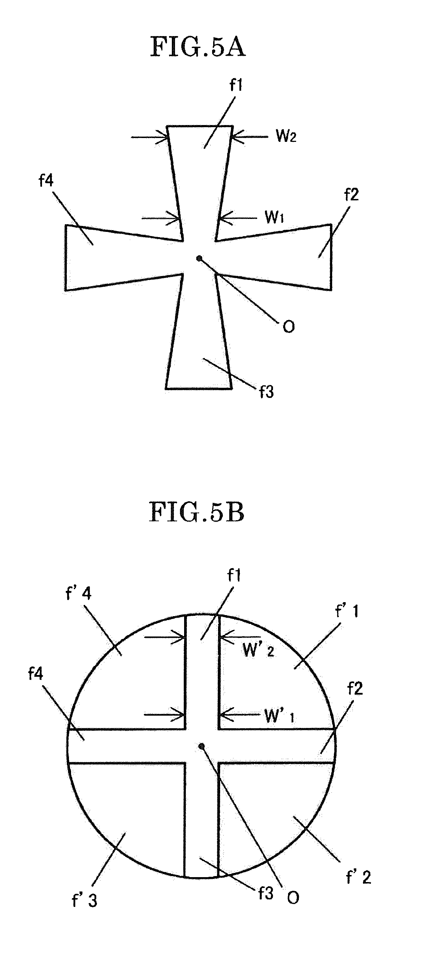

As shown in FIGS. 5(a), 6, 7(a) and 8(a), a steel material where at least three members with long sides (f1 to f4) are placed in radius form around the center axis O parallel to the longitudinal direction of the steel material is used as the steel material before being twisted. The number of members with long sides is not limited as long as it is three or more. As shown in FIGS. 5(a) to 8(b), however, steel materials where four members with long sides are placed in cross form are available at low cost in the market as compared to those with three, five or more members with long sides and can be easily processed due to a relatively small number of members with long sides, and thus are more appropriate for use. In addition, the spiral piece of steel gained by carrying out a twisting process on this steel material can have mechanical strength that is remarkably higher than that of the twisted steel plate irrelevant of the fact that the number of members with long sides is not very large.

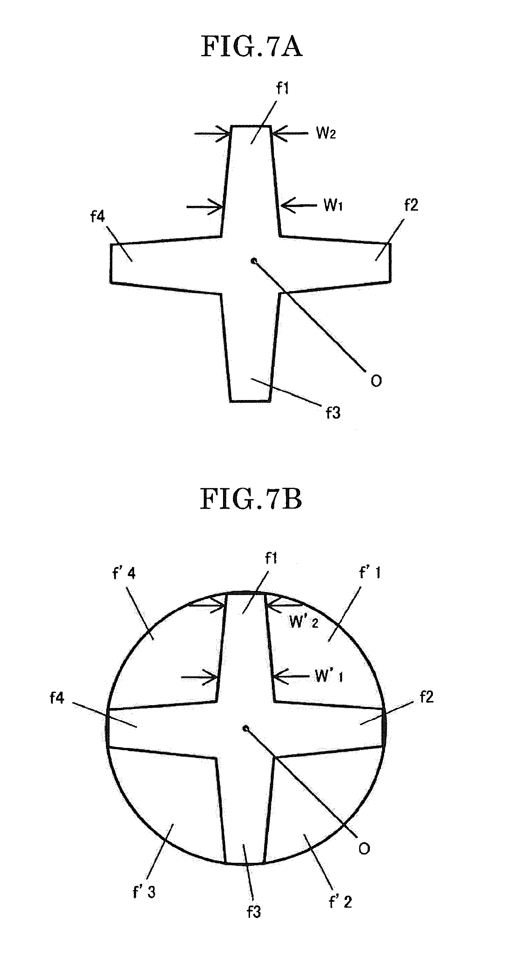

It is possible to adopt a steel material where the steel material has such a shape as in FIG. 5(a) in a cross-section as an example of the steel material. As for the thickness of the members with long sides, the thickness w2 in the portions towards the outside is set greater than the thickness w1 in the portions close to the center axis. Usually, the portions towards the outside of the members with long sides are stretched more when the steel material is twisted, and therefore, the thickness of the outside of the members with long sides becomes thinner than the portions closer to the center axis. Taking this fact into consideration, the thicknesses of the respective portions in the members with long sides are set such that w2 > w1 in the steel material before being twisted so that the thickness w2' of the outside of the members with long sides and the thickness w1' of the portions close to the center axis become approximately the same as shown in FIG. 5(b) in the form after being twisted.
As shown in FIG. 5(b), the symbol f1' denotes a spiral portion where the member with long sides f1 has been twisted. The same can be said for the other portions f2' to f4'. This is the same for FIGS. 7(a) to 8(b).

As shown in FIG. 7(a), in the steel material before being twisted, it is also possible for the thickness w2 towards the outside of the members with long sides to be smaller than the thickness w1 in the portions close to the center axis O. In this case, as shown in FIG. 7(b), in the spiral piece of steel after being twisted, the thickness w2' toward the outside of the members with long sides is further smaller (w2' < w2).

As for the thickness (w1' or w2') of the portions in the members with long sides of the spiral piece of steel after being twisted, it is possible to select w1' = w2' as in FIGS. 5(a) and 5(b) or w1' > w2' as in FIGS. 7(a) and 7(b) depending on the application of the spiral piece of steel. In the case where it is necessary to maintain the mechanical strength of the members with long sides of the spiral steel at a high level, for example, it is preferable for the thickness w2' of the outside of the members with long sides to be great as shown in FIGS. 5(a) and 5(b). Meanwhile, in the case where the spiral piece of steel is used as a screw in a kneading apparatus or the like, it is preferable for the end of the blade portions (members with long sides) of the spiral piece of steel to be tapered or to have an acute angle as shown in FIGS. 7(a) and 7(b) in order to reduce the friction in the end portions of the blades.

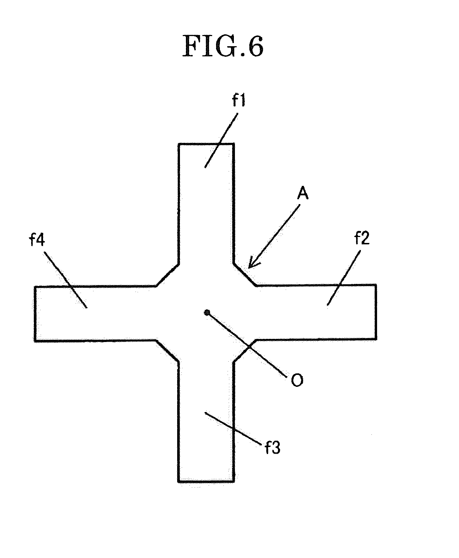

In addition, as shown in FIG. 6, thick portions A are formed on the base of the members with long sides (f1 to f4) in order to provide a structure such that the members with long sides are not broken in the vicinity of the center of the steel material when a twisting process is carried out on the steel material.

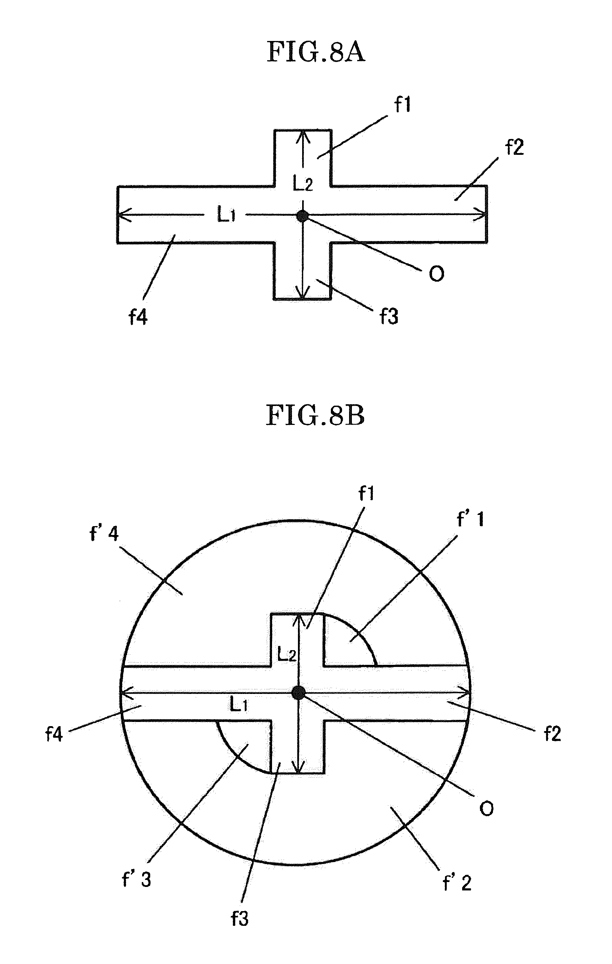

FIGS. 8(a) and 8(b) are diagrams for illustrating the spiral piece of steel according to another embodiment (fourth embodiment) of the present invention. The embodiment in FIGS. 8(a) and 8(b) is characterized in that the lengths of the members with long sides f1 to f4 are different. More concretely, the length L1 in the lateral direction of the figure formed of the members with long sides f2 and f4 is set to be greater than the length L2 in the longitudinal direction of the figure formed of the members with long sides f1 and f3. The steel material having a cross-section as in FIG. 8(a) can be twisted so that a spiral piece of steel having a cross-section as in FIG. 8(b) can be formed. This spiral piece of steel is characterized in that the members with long sides f2 and f4 mainly function as blade portions (spiral portions) of the spiral piece of steel, whereas the members with long sides f1 and f3 contribute to increasing the mechanical strength of the spiral piece of steel against stress applied to the spiral piece of steel in the lateral direction as shown in FIG. 1(b). As described above, it is effective to provide portions (members with long sides f1, f3 in FIG. 8(a)) that protrude in the direction of the normal to the plane of the steel plate (members with long sides f2, f4 in FIG. 8(a)) in order to increase the mechanical strength as compared to a conventional twisted steel plate.
Here, the height of the steel material in FIG. 8(a) can be set low in the longitudinal direction of the figure as compared to the steel material in FIGS. 5(a) to 7(b). Therefore, it is possible to stock steel materials as resources in a smaller space, which is economical.

In accordance with the method for forming a steel material to be used for the spiral piece of steel according to the present invention, steel plates that become members with long sides are prepared and welded together so that three or more members with long sides can be placed in radius form around the center axis. At this time, it is possible to place materials in cylindrical form, triangular prism form or quadrangular prism form in the center portion to which members with long sides are welded in radius form. In addition, it is possible to form a steel material in any form as shown in FIGS. 5(a) to 8(b) by extrusion molding a steel material that has been melted or softened from a furnace through a die having an opening in such a form as to correspond to that of a cross-section of the steel material to be formed.

For the spiral piece of steel according to another embodiment of the present invention, it is possible to use a steel material where a hollow pipe P1 to P3 is placed in the location of the center axis O and the members with long sides f1 to f4 are placed and secured around the hollow pipe P1 to P3. In the case where the width of the hollow pipe is greater than the thickness of the members with long sides, it is possible to increase the mechanical strength of the spiral piece of steel relative to the stress applied to the spiral piece of steel in the lateral direction (direction perpendicular to the longitudinal direction in which the spiral piece of steel runs) by twisting the steel material where the members with long sides are joined to the hollow pipe.

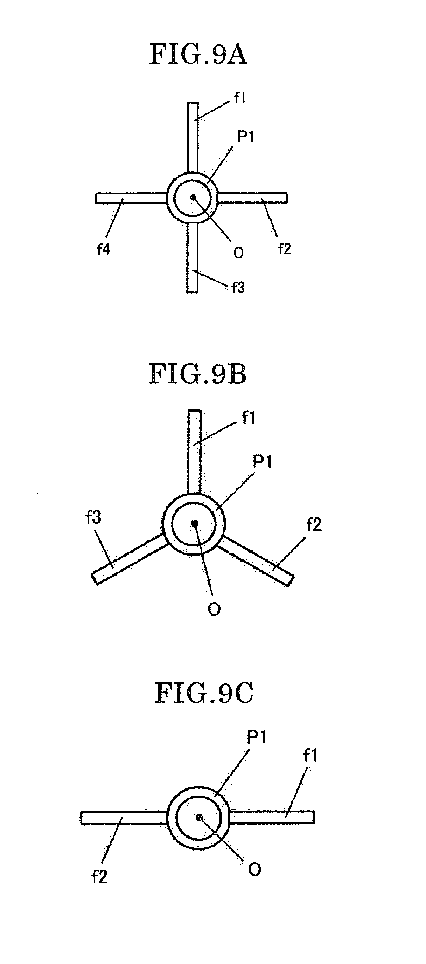

In the case where a hollow pipe is used, the number of members with long sides is not limited to three or more. As shown in FIGS. 9(c), 10(c), 11(d) and 11(e), it is possible to use a steel material where the center axis O is parallel to the longitudinal direction of the steel material, two members with long sides f1 and f2 are placed symmetrically relative to the center axis, a hollow pipe P1 to P3 is placed along the center axis O, and the members with long sides are secured around the hollow pipe, and even in the case where such a steel material is used, it can sufficiently bear the stress applied to the spiral piece of steel in the lateral direction.

FIGS. 9(a) to 9(c) show examples where a steel pipe P1 in cylindrical form is used as the hollow pipe. FIG. 9(a) shows an example where four members with long sides f1 to f4 are joined to the hollow pipe P1. FIGS. 9(b) and 9(c) show examples where three and two members with long sides are joined to the hollow pipe, respectively.

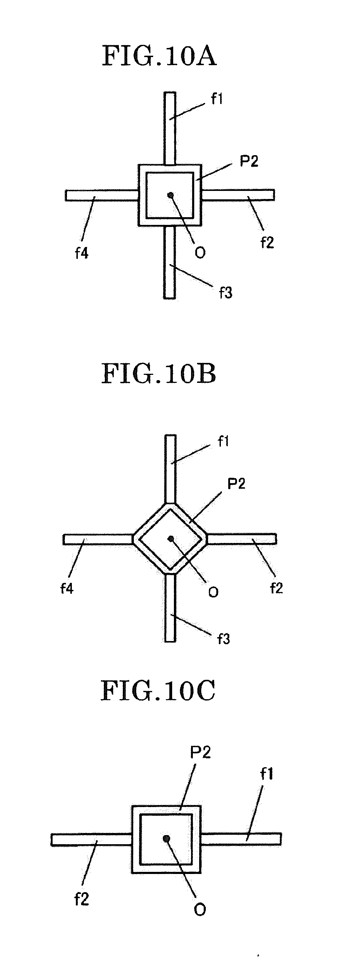

FIGS. 10(a) to 10(c) show examples where a steel pipe P2 that is square in a cross-section is used as the hollow pipe. FIG. 10(a) shows an example where four members with long sides f1 to f4 are joined to sides of the hollow pipe P2 (locations corresponding to the sides of the hollow pipe in a cross-section as shown in FIG. 10(a)). FIG. 10(b) shows an example where the same members with long sides are placed and secured to the corner portions of the hollow pipe P2. In addition, FIG. 10(c) shows an example where two members with long sides are joined to sides of the hollow pipe P2.

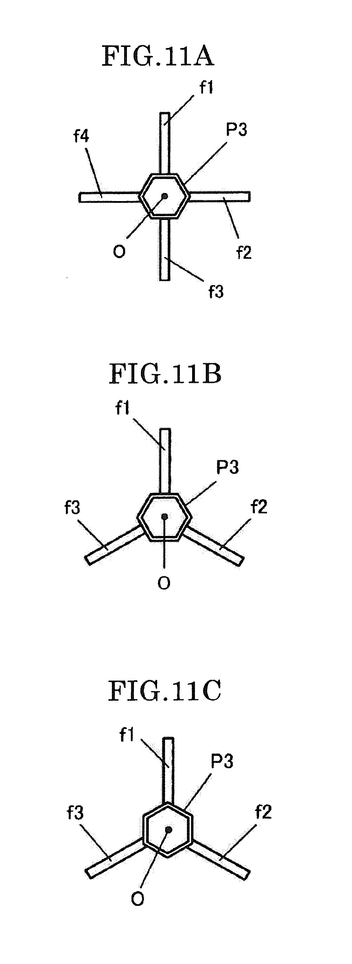

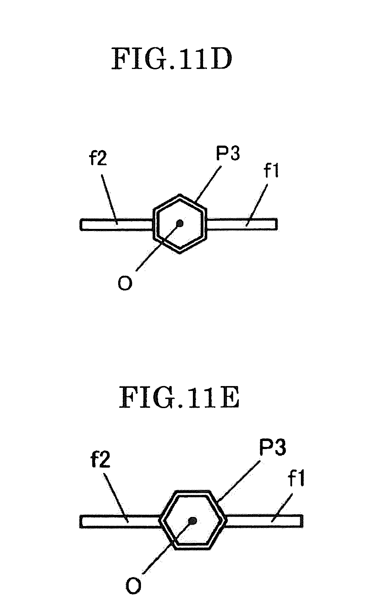

FIGS. 11(a) to 11(e) show examples where a steel pipe P3, which is hexagonal in a cross-section, is used as the hollow pipe. FIG. 11(a) shows an example where four members with long sides f1 to f4 are joined to sides of the hollow pipe P3. In the examples in FIGS. 11(b) and 11(c), three members with long sides are placed and secured to the side or corner portions of the hollow pipe P3. Furthermore, FIGS. 11(d) and 11(e) show examples where two members with long sides are joined to side or corner portions of the hollow pipe P3.

As shown in FIGS. 9(a) to 11(e), it is possible to use the spiral piece of steel with a hollow pipe P1 to P3 in various applications, such as a heat exchanger or a pipe for discharging water, where the hollow pipe is used as part of a support or a flow path for a fluid is formed inside the hollow pipe.

As described below, it is also possible to use the spiral piece of steel with a hollow pipe P1 to P3 having a number of holes created in its pipe wall in various applications where a fluid that has been moved through the hollow pipe is discharged to the outside of the hollow pipe through the holes, or a fluid outside the hollow pipe can be taken into the hollow pipe through the holes so as to be moved through the hollow pipe.

As for a method for carrying out a twisting process on the steel material, it is possible to use the twisting process method for a steel plate in Patent Document 7. In order to prepare a spiral piece of steel, it is important to twist the entirety of the steel material around the center axis of the steel material at a constant speed while applying the same tension to the number of members with long sides.

In order to do this, at least two holding means for holding the portions of the members with long sides ranging from the vicinity of the center axis to the outside end of the members with long sides are prepared so as to hold the two ends of the steel material, and tension is applied to the steel material in such a manner that at least one holding means is pulled away from the other holding means, and at the same time, at least one holding means is rotated around the center axis of the steel material. As a result, a spiral piece of steel where the pitch intervals of the spiral blade portions are constant can be easily manufactured.

In accordance with another manufacturing method, two or more holding means are prepared in such a manner that the holding means are formed of a combination of rollers for sandwiching each member with long sides. Next, these holding means are moved along the steel material in the longitudinal direction of the steel material while maintaining the distance between these holding means constant. Angles at which the members with long sides are held are set to be different between adjacent holding means so that a twisting force is generated and applied to the other holding means around the center axis of the steel material. Though such holding means do not naturally generate a tension for pulling the steel material, it is possible to carry out a twisting process continuously on the steel material.

Particularly, in the case where a steel material is extrusion molded as described above, it is possible to provide a number of holding means formed of rollers as described above so that a twisting process is continuously carried out while moving the steel material immediately after extrusion molding.
Moreover, in the case where the hollow pipes P1 to P3 in FIGS. 9(a) to 11(e) are used, it is possible to insert a cylindrical core into the hollow pipe in order to prevent the spiral steel from deforming in the direction of the center axis. In the case where a hollow pipe in prism form is used, as shown in FIGS. 10(a) to 11(e), it is possible to insert jigs in prism form, of which the form is the same as that of the space within the inner wall of the hollow pipe, into the two ends of the hollow pipe so that the jigs can be rotated as the entirety of the steel material is twisted, and thus, the twisting of the hollow pipe can be aided.

Next, applications of the spiral piece of steel according to the present invention are described.
The spiral piece of steel according to the present invention is excellent in mechanical strength as compared to a conventional twisted steel plate and has such advantages that the pitch intervals in the twisted portions (spiral blade portions) are short in the structure. The same applications as for the conventional twisted steel plate are naturally possible, and in addition, further applications are possible by using these advantages.

In the case where a spiral piece of steel is used as a pile (spiral steel pile) that is driven into or buried in the ground, the spiral piece of steel is strong against deformation in response to stress or compression in the lateral direction of the pile, and thus, the pitch intervals in the spiral blade portions can be made smaller, and therefore, it is possible to increase the contact area with the ground so that the resistance against the pulling force can be increased as compared to the twisted steel plate.

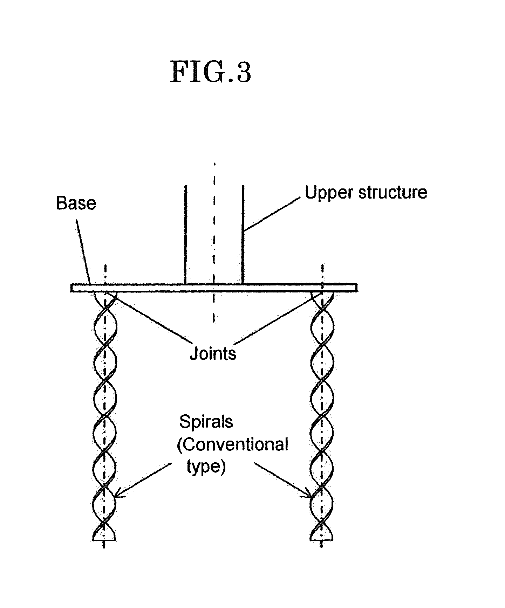

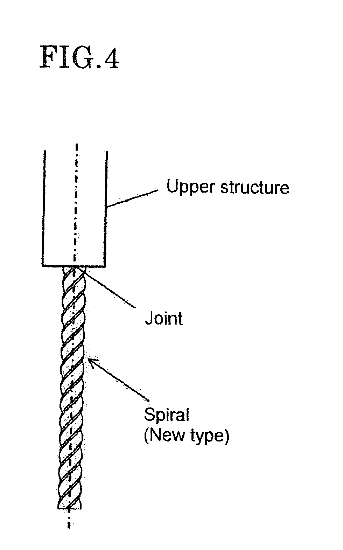

In the case where the twisted steel plate in FIG. 3 is used, the upper structure is secured to the base, and a number of spiral steel piles are fixed to the base in order to resist the moment of bending and the base is fixed to the ground in order to secure the upper structure. As compared to this, in the case of the spiral steel piles according to the present invention, the number of piles used can be reduced due to its excellence in mechanical strength including the rigidity against bending, and thus, as shown in FIG. 4, for example, it is also possible to directly attach the upper structure to one spiral steel pile.

In addition, in the case where the structure placed on the ground is held by spiral steel piles, it is possible for part of the spiral pieces of steel to be exposed from the ground so that these exposed parts can be used as supports for supporting the structure. This is also possible because the mechanical strength of the spiral piece of steel according to the present invention is remarkably increased as compared to the twisted steel plate.

Though piles made of a twisted steel plate are generally buried in the ground in the downward direction, it is possible for the spiral steel piles according to the present invention to be driven into the ground in the horizontal direction or at an angle directed upward than that. In particular, the pitch intervals in the spiral blade portions of the spiral piece of steel can be made smaller so that the resistance against the ground is increased, and thus, it is possible to apply it to an anchor for preventing landslides or a base in the ground that is in the horizontal direction or directed upward than that, which is difficult with a conventional twisted steel plate.

In the case where a spiral piece of steel is used for the drill part of a digging apparatus, it is possible for the pitch intervals in the spiral blade portions of the spiral piece of steel to be made smaller than that of the twisted steel plate so as to increase the contact area with the ground, and therefore, it is possible to scrape out the ground more efficiently than with the conventional twisted steel plate in Patent Document 4. In addition, the high mechanical strength makes it possible to dig a straight hole, and thus, it is possible to apply this as an excavator having a power source with a strong rotational force, such as of a motor.

In the case where the spiral piece of steel is used as a sending screw for a sending apparatus, the high mechanical strength of the spiral piece of steel is used to make it possible for the sending screw itself to have a function of supporting the sending member, which is difficult with the conventional twisted steel plate in Patent Document 5. Application as an apparatus for sending a large-scale machine is also possible.

In the case where the spiral piece of steel is used as the kneading blade in a kneading apparatus, the pitch intervals in the spiral blade portions of the spiral piece of steel can be made smaller so as to increase the contact area with the object to be kneaded, and thus, it is possible to knead the object more efficiently than with the conventional twisted steel plate in Patent Document 6. In the case where a kneading apparatus having the same function is formed, naturally, it is possible to make the machine itself more compact.

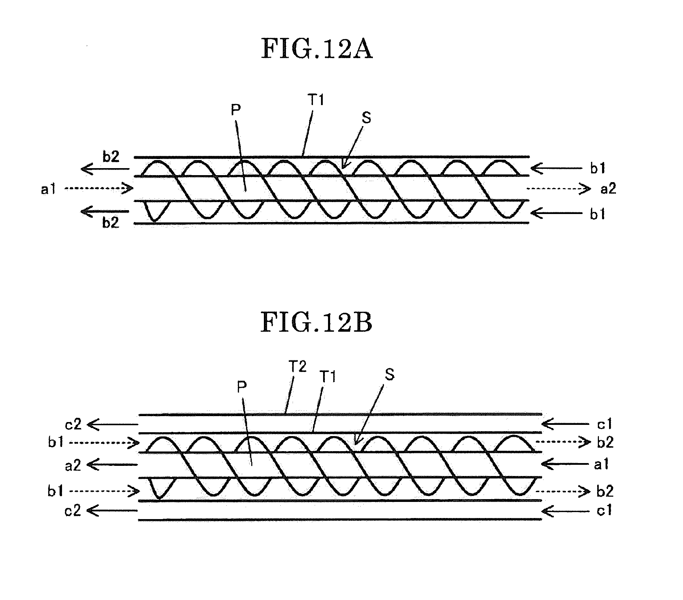

In the spiral piece of steel using a hollow pipe P1 to P3 as shown in FIGS. 9(a) to 11(e), the spaces created by the spiral blade portions can be used as paths for a fluid, and in addition, the inside of the hollow pipe can also be used as a path for the fluid. Therefore, it is possible to form various types of fluid paths as shown in FIGS. 12(a) to 12(d), which can be used as a flow path for a fluid within a heat exchanger or a conveyance path for various types of fluids.

In FIG. 12(a), a cylindrical tube T1 enclosing the spiral piece of steel S is provided, and the inside of the hollow pipe P for forming the spiral piece of steel S is used as a fluid path from the dotted arrow a1 to the dotted arrow a2, and the space between the spiral piece of steel S and the tube T1 is used as a fluid path from the solid arrow b1 to the solid arrow b2. In addition, the movement of a fluid from the arrow b1 to the arrow b2 may accompany the rotation of the spiral piece of steel. Furthermore, various types of fluids may move in the same direction. Thus, such functions can be also be realized where two fluids can be made to be in close proximity to each other so that heat exchange between the two can be made easy.

In FIG. 12(b), another cylindrical tube T2 is provided outside the tube in FIG. 12(a). As a result, it is possible to create a fluid path from the solid arrow c1 to the solid arrow c2 in the space between the tubes T1 and T2 in addition to the fluid paths in FIG. 12(a).

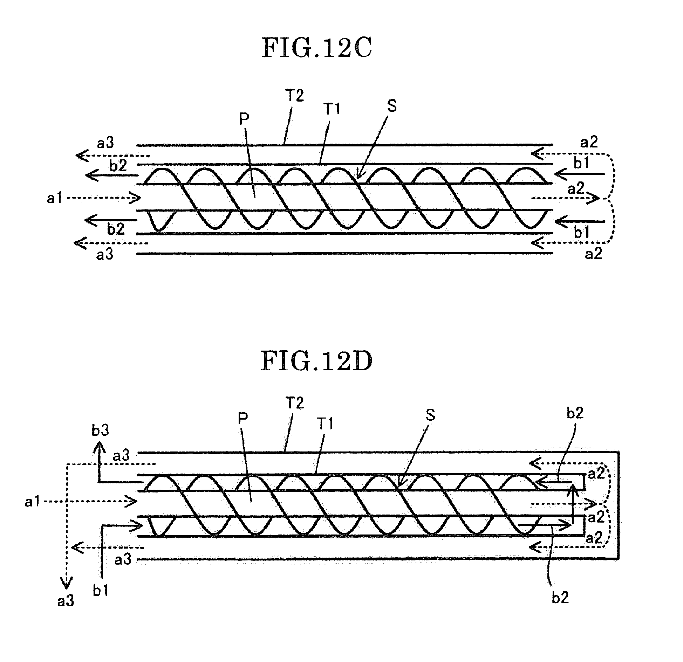

In FIG. 12(c), the fluid that has passed through the fluid path in the hollow pipe in FIG. 12(b) is further guided into the fluid path between the tubes T1 and T2. Furthermore, in FIG. 12(d), the end of the blade portions of the spiral piece of steel S is made to make close contact with the inner wall of the tube T1, which makes it possible to create a number of fluid paths between the spiral piece of steel and the tube T1. Two or more members with long sides for forming blade portions, for example, would make it possible to create two or more fluid paths. In the structure in FIG. 12(d), the fluid that has passed through one fluid path from the solid arrow b1 to the solid arrow b2 is guided to another fluid path (from the solid arrow b2 to the solid arrow b3).

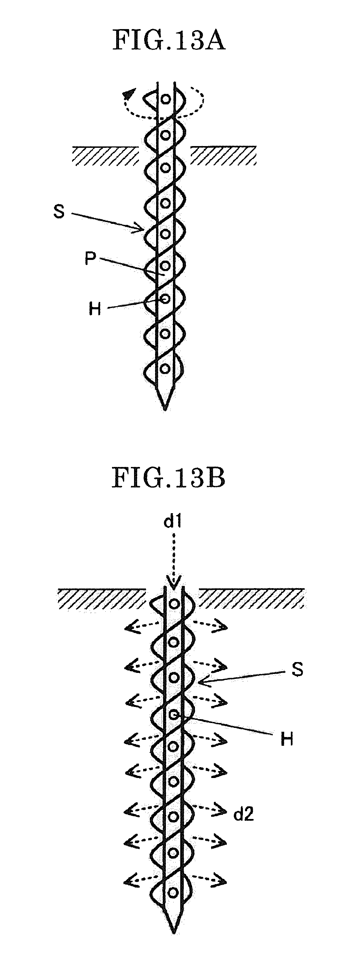

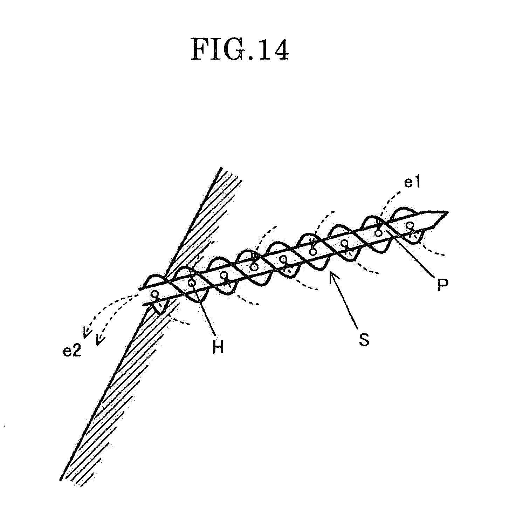

FIGS. 13(a), 13(b) and 14 show examples of application where the hollow pipe P for forming the spiral piece of steel S is provided with a number of holes H. FIGS. 13(a) and 13(b) show an example of a pipe for injecting grout. The spiral piece of steel is located and screwed into the ground as shown in FIG. 13(a), and after that, grout for improving the ground base is put into the ground under pressure through the hollow pipe P of the spiral piece of steel as shown in FIG. 13(b) so that the grout can be injected into the ground through the holes H.

FIG. 14 shows an example of a pipe for discharging water where the spiral piece of steel is driven into or buried in the ground so that the water in the ground is taken into the hollow pipe P through the holes H of the hollow pipe P (arrow e1), and thus, water is discharged from one end of the hollow pipe P (arrow e2). Here, as shown in FIG. 14, it is preferable for the spiral piece of steel to be driven into or buried in the ground at an inclined angle so that the end of the hollow pipe that becomes the water discharging opening is at the lower end of the inclined spiral piece of steel.

### Industrial Applicability

As described above, the present invention makes it possible to provide a spiral piece of steel having high mechanical strength and being capable of easily making smaller the pitch intervals in the twisted portions (spiral blade portions) without changing the twist angle and an application product thereof as well as a method for manufacturing the spiral piece of steel.

## Claims

1. A spiral piece of steel, **characterized by** being formed by twisting a steel material around a center axis, where the center axis is parallel to the longitudinal direction of the steel material, and the steel material has such a form that at least three members with long sides are placed in radius form around the center axis.

2. The spiral piece of steel according to Claim 1, **characterized in that** a hollow pipe is provided along the center axis, and the members with long sides are placed and fixed around the hollow pipe.

3. A spiral piece of steel, **characterized by** being formed by twisting a steel material around a center axis, where the center axis is parallel to the longitudinal direction of the steel material, and the steel material has such a form that two members with long sides are placed symmetrically relative to the center axis, a hollow pipe is provided along the center axis, and the members with long sides are placed and fixed around the hollow pipe.

4. The spiral piece of steel according to Claim 2 or 3, **characterized in that** a number of holes are created in a wall of the hollow pipe.

5. The spiral piece of steel according to any of Claims 1 to 4, **characterized in that** the steel material is formed such that the members with long sides have such a thickness as to increase as the distance from the center axis increases, and the form of the members with long sides in a cross-section becomes approximately rectangular when the steel material is twisted.

6. A spiral steel pile, **characterized in that** the spiral piece of steel according to any of Claims 1 to 5 is used as a pile to be driven into the ground or buried in the ground.

7. The spiral steel pile according to Claim 6, **characterized by** further comprising a structure fixed to the spiral steel pile in such a manner that part of the spiral piece of steel is exposed from the ground, and the exposed part functions as a support for supporting the structure.

8. The spiral steel pile according to Claim 6, **characterized in that** the spiral steel pile is driven into the ground in the horizontal direction or at an angle directed upward than the horizontal direction so as to be used as a ground anchor for preventing landslides or a base in the ground.

9. A spiral steel pile, **characterized in that** the spiral piece of steel according to Claim 4 is used as a pipe for discharging water from the ground through the hollow pipe or as a pipe for injecting grout into the ground through the hollow pipe when driven into or buried in the ground.

10. A digging apparatus, **characterized in that** the spiral piece of steel according to any of Claims 1 to 5 is used for a drill part of the digging apparatus.

11. A feeding device, **characterized in that** the spiral piece of steel according to any of Claims 1 to 5 is used as a sending screw of the feeding device.

12. A kneading device, **characterized in that** the spiral piece of steel according to any of Claims 1 to 5 is used as a kneading blade of the kneading device.

13. A heat exchanger, **characterized in that** the spiral piece of steel according to Claim 2 or 3 is used as the wall material with which two fluids can be separated from each other and through which heat can be exchanged between the two fluids within the heat exchanger.

14. A method for manufacturing the spiral piece of steel according to any of Claims 1 to 5, **characterized in that** the steel material is twisted while applying a predetermined tension to the steel material in the longitudinal direction.

15. The method for manufacturing the spiral piece of steel according to Claim 14, **characterized in that** two holding means for holding both ends of the steel material are used, tension is applied in such a manner as to pull one holding means away from the other, and at least one holding means is rotated around the center axis of the steel material.
